# EUROPEAN PATENT APPLICATION

(11) **EP 0 945 286 A1**
(43) Date of publication of application: **29.09.1999**
(21) Application number: 98119657.9
(22) Date of filing: 17.10.1998
(51) Int. Cl.: B60G 5/02

(54) **A rocker arm suspension for a tandem axle vehicle provided with a central elastic member connected to the vehicle frame**

(30) Priority: 24.03.1998 IT TO980251
(71) Applicant: Perlini, Roberto, 37047 San Bonifacio-Locara (Verona) (IT)
(72) Inventor: Perlini, Roberto, 37047 San Bonifacio-Locara (Verona) (IT)
(74) Representative: Robba, Pierpaolo

(57) **Abstract**

A suspension system, particularly a tandem axle vehicle suspension system, comprising a central elastic member (9, 10) rigidly coupled to the frame (1) of the vehicle, and provided at its lower end with a fork (5) carrying a rotation pin (6) on which a rigid rocker arm (7) is mounted.

## Description

The present invention relates to a rocker arm suspension for a tandem axle vehicle provided with a central elastic member connected to the vehicle frame.

In industrial vehicles of the type equipped with more than two axles, for example in tractors and semi-trailers of vehicles for freighting of goods, in order to uniformly distribute the weight applied to the vehicle, there is usually provided a load bearing articulated (pivoted) structure between two consecutive (adjacent) axles. This structure rests on the axles themselves and is commonly articulated either with respect to the middle point between the two axles, or with respect to an intermediate point, in accordance with the desired distribution of the weight on the two axles.

An articulated structure of this kind, also known as tandem, is rigidly connected to the vehicle frame or self-bearing structure through a central articulated joint allowing the swinging of the two axles along a vertical direction (upwards or downwards) so that the wheels can move over humps and bumps by rotating about such joint while at the same time transferring to the frame the vibrations caused by the road unevenness

In order to get a minimum level of elasticity and reduce the vibrations applied to the frame, in the above example of connection the arms are usually made up by leaf springs. However the known axles suspension systems have a poor drive comfort caused by an insufficient cushioning of the road irregularities, because of the use of a too rigid elastic means. An uneven road surface causes vibrations and stresses that are harmful to the whole vehicle structure, and moreover cause a loss of adherence between the tires and the ground, thus increasing the tire wear with a reduction of their useful life.

Therefore, in general, the known devices have not yet satisfactorily solved the technical problem of cushioning the oscillations caused by the road unevenness that are transmitted to the vehicle frame.

EP-A-0 149 262, in the name of the present applicant, discloses a suspension system provided with rigid arms having an end directly connected to the axles and being articulated at their centre at a pivot pin about which the system can rotate, which arms act onto an elastic body whose deformation - caused by the oscillation of the arms about their pivot pin - accomplishes the suspension effect.

In EP-A-0 149 962, in the name of the present applicant, it has been suggested a suspension system for the tandem axles of a vehicle having two or more axles, comprising adjacent axles with wheels mounted at the ends, the system being provided with a suspension member interposed between the vehicle frame and the axles, and comprising two elastic arms in form of quarter-elliptic springs.

It is an object of the present invention to overcome the limitations of the prior art devices and/or to further improve the performance of a suspension system, and more particularly to provide a suspension system for tandem axles, that is of simple construction, low cost, and capable of effectively damping the oscillations caused by the road unevenness, so as to achieve a high drive comfort without reducing the load stability, particularly when the vehicle is cornering.

This object is accomplished through a system as claimed in claim 1.

Additional advantageous features are recited in the dependent claims.

According to the invention, an elastic member formed by a pair of parts movable relative to one another is disposed between the vehicle frame and the tandem point of connection, one of such parts being directly anchored to the frame, and with at least one elastic means located between said pair of parts and being compressed by their relative displacement along a given direction.

Preferably, the two parts or members movable relative to one another are realized by means of a circular cross-section cylinder and a slidable member or piston movable within such cylinder along an upwards-downwards direction. By using a cylinder-piston assembly the side pushes and the sideways thrusts applied by the axles are kept low.

In this preferred embodiment, between the cylinder and the piston there is interposed an elastic or resilient means acting as an air cushion or shock absorber to damp the vertical oscillations generated by an uneven road and transmitted to the vehicle frame.

This elastic means can comprise a fluid, preferably a gaseous fluid, for example air, or a liquid, for example oil, or even elastic metal components such as a metal spring, or polymer elastic bodies, for example rubbers. Advantageously between the two movable parts there is provided a combination of two or more of the above elastic means, for example a helical spring and a compressible fluid (for example air) so as to obtain an optimum elastic curve of the resulting assembly. Another possible embodiment employs an oil (incompressible per se) in which there are dispersed or otherwise contained bubbles of a gas, such as air, such bubbles being compressed when the two movable parts, in particular the piston and/or the cylinder, axially move/s towards a closing position.

The invention will now be disclosed with details with reference to a preferred but not limiting embodiment illustrated in the attached drawings in which:

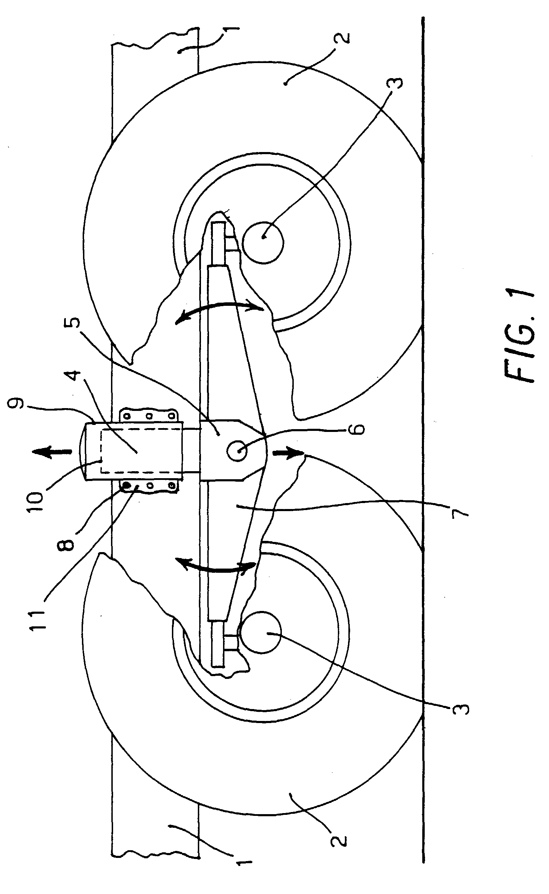

Fig. 1 is a partial view illustrating the structure of a system according to the invention;
Fig. 2 is a transverse central cross section along line II-II in Fig. 1.

With reference to the Figures, it is shown a portion of a vehicle provided with several axles for the transport of goods, for example a truck and full trailer, comprising a chassis frame with only two portions of the side members 1 being represented, and at least two adjacent axles 3, 3 to each ends of which wheels (or pairs of wheels) 2, 2 are mounted.

On the frame 1 of the vehicle there is provided a suspension member 4 secured to the frame by means of a flanged portion 11 and bolts 8. In the illustrated embodiment, the suspension member 4 is formed by two coaxial cylinders, respectively an outer fixed cylinder 9 secured to the frame, and an inner cylinder 10 movable along a vertical direction.

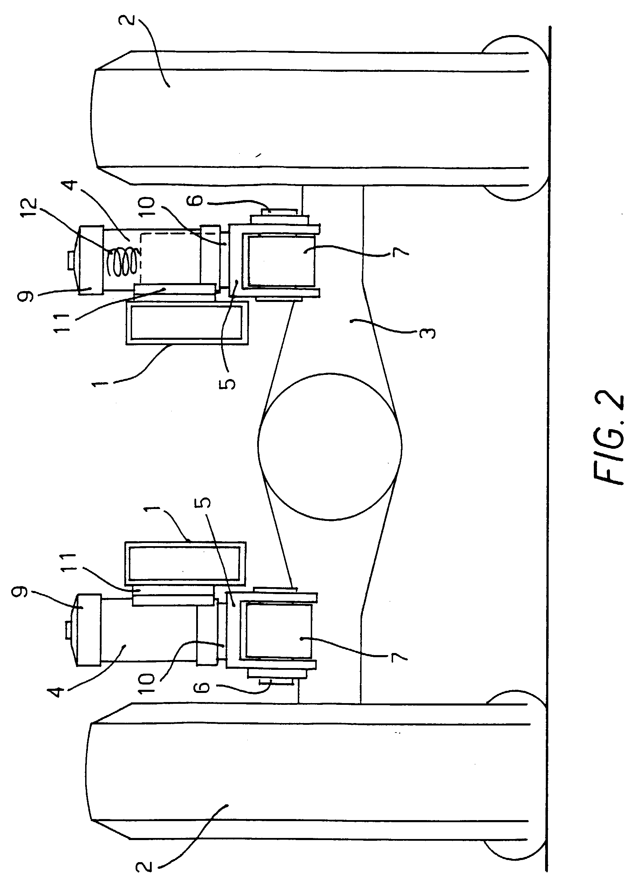

As schematically illustrated through a spring indicated with 12 in Fig. 2, at least one elastic or resilient compressible means acting as a shock absorber is provided within the cylinder 10, for example a resilient solid body, such as a helical spring or a body of a polymeric material, or a fluid elastic body, such as a liquid or a gas, or a combination of two or more of such elastic means.

Advantageously, between the two movable members 9 and 10 there is present a combination formed by two or more elastic means, for example a helical spring and a compressible fluid (for example air), so as to obtain an optimum resulting elastic characteristic of the assembly. Another possible embodiment of the invention provides for the use of an oil (that it by itself incompressible) into which are dispersed or anyhow present bubbles of a gas, such as air, that are compressed when the two movable parts, in particular the piston and/or the cylinder, axially move/s towards a closing position.

When the use of a gaseous elastic body is provided between the two cylinders suitable sealing gaskets are mounted thereon. The suspension member allows a vertical displacement of the whole assembly, while the compression of the fluid (for example air or a gas) and/or of the spring accomplishes the desired suspension function.

As better illustrated in Fig. 2, the movable cylinder 10 carries at the lower end a fork 5 to which an articulation pin 6 of a rocker arm 7 is mounted. The ends of this rocker arm rest on the adjacent axles 3 of the vehicle wheels 2, and the pin 6 allows the rocker 7 to oscillate about its axis (i.e. the axis of pin 6).

Preferably the rocker arm 7 is formed as a rigid body, although this embodiment is not to be construed as a limitation since the rocker arm can be provided with a certain amount of elasticity, for example by realizing the rocker with a spring leaf or the like.

It is further to be noted that according to the invention, between the movable member 10 (the piston in the present case) and the axles 3 there is provided an articulated connection or joint. Such articulated connection can be built in several forms, e.g. as a ball joint.

Although the invention has been illustrated with particular reference to preferred embodiments thereof, it is not to be considered as limited to what has been shown, but include all the changes and/or modifications of materials, sizes and construction that will become evident to those skilled in the art.

## Claims

1. A suspension system for tandem axles of an industrial vehicle equipped with two or more axles, comprising at least two adjacent axles (3, 3) with wheels (2, 2) mounted to the ends of said axles, with a suspension member (4) interposed between the frame (1) of the vehicle and said axles (3, 3), characterized in that said suspension system (4) comprises two slidable members (9, 10) movable relative to one another, and between which at least a compressible elastic means (12) is disposed, one (9) of said members being fixed and secured to said frame (1), and in that an articulated connection is provided between said other movable member (10) and said axles (3, 3).

2. A suspension system as claimed in claim 1, characterized in that said other (10) of said reciprocally movable members is coupled to said axles (3, 3) through a rocker arm (7) pivotally secured to said other movable members.

3. A suspension system as claimed in claim 1 or 2, characterized in that said movable members are formed as a cylinder (9) and a piston (10) slidable inside said cylinder (9).

4. A suspension system as claimed in claim 3, characterized in that at its lower side said movable cylinder (10) carries at the lower end a fork (5) on which said rocker arm (7) is pivotally secured (at 6), with each end of said rocker arm (7) resting on an axle (3) of the vehicle wheels (2).

5. A suspension system as claimed in claim 1, characterized in that said fixed cylinder (9) is connected to the vehicle frame (1) by means of a flanged member (11) and screws (8).

6. A suspension system as claimed in claims 1 to 5, characterized in that said at least one elastic means (12) comprises one of the group formed by: a mechanical spring, a body of an elastic polymeric material, a compressible fluid.

7. A suspension system as claimed in claim 1, characterized in that a helical spring and a compressible fluid are provided between said two reciprocally movable members (9, 10).

8. A suspension system as claimed in claim 6 or 7, characterized in that said fluid is selected among the group formed by: oil, gas, air.

9. A suspension system as claimed in claim 1, characterized in that said articulated connection comprises an elastically deformable body.

10. A suspension system as claimed in claim 2, characterized in that said rocker arm is formed as a rigid body.
